# EUROPEAN PATENT SPECIFICATION

(11) **EP 2 390 945 B1**
(45) Date of publication and mention of the grant of the patent: **22.08.2012**
(21) Application number: 10190592.5
(22) Date of filing: 10.11.2010
(51) Int. Cl.: H01M 2/20, H01M 10/04, H01M 2/10, H01M 2/30

(54) **Battery module**
Batteriemodul
Module de batterie

(30) Priority: 24.05.2010 KR 20100048118
(43) Date of publication of application: 30.11.2011
(73) Proprietor: SB LiMotive Co., Ltd., Giheung-gu Yongin-si, Gyeonggi-do 446-711 (KR)
(72) Inventor: Kim, Tae-Yong, Gyeonggi-do (KR)
(74) Representative: Gulde Hengelhaupt Ziebig & Schneider

(56) References cited:
- US-A1- 2001 039 150
- US-A1- 2006 145 657
- US-A1- 2009 053 591

## Description

### BACKGROUND

### 1. Field

The following description relates to a battery module including a plurality of unit batteries coupled by a connection member.

### 2. Description of the Related Art

A battery module is a module including a plurality of unit batteries connected in series, thereby realizing high power and a large capacity. A rechargeable battery module is used as a power supply for a device requiring a large capacity, such as for driving motors in electric vehicles or hybrid vehicles. The unit battery may be a rechargeable battery that is capable of being recharged. Recently, a high power rechargeable battery using a non-aqueous electrolyte with high energy density has been developed.

A positive terminal and a negative terminal protrude from each unit battery, and the plurality of unit batteries are alternately arranged such that the positions of the positive terminal and the negative terminal are opposite to each other. The battery module includes a connection member such that the unit batteries are coupled in series. The connection member includes a bus bar that is attached to the positive terminal and the negative terminal of two adjacent unit batteries thereby connecting them, and a fastening member fastened to the positive terminal and the negative terminal and fixing the bus bar after attaching the bus bar.

However, in the above-described structure, the bus bar is separately provided such that a plurality of assembly processes to couple a plurality of bus bars and a plurality of tightening members to the unit batteries are required, and thereby the assembling time is increased. In US 2001/0039150 another battery module of the prior art is disclosed, wherein a plurality of bus bars are positioned in a resin-made guide comprising a plurality of bus bar holder units.

On the other hand, there is a tolerance for an exterior size of the unit battery and the position of the electrode terminals in the process of manufacturing the unit battery. In addition, a volume expansion of the unit battery is generated in the process of repeatedly charging and recharging the unit battery. However, the connection member including the bus bar and the tightening member cannot be adapted for an irregular tolerance of the unit battery or the volume change. This may lead to deterioration of the assembly quality and deformation of the unit battery.

The above information disclosed in this Background section is only for enhancement of understanding of the background of the invention and therefore it may contain information that does not form the prior art that is already known in this country to a person of ordinary skill in the art.

### SUMMARY

An aspect of an embodiment of the present invention is directed toward a battery module that is easily assembled by a plurality of improved bus bars. The battery module is capable of preventing deformation of a unit battery and increases the assembly quality of a connection member to accommodate a manufacturing tolerance of the unit battery and/or a volume change.

A battery module according to an exemplary embodiment of the present invention includes a plurality of unit batteries and a connection member electrically connecting the plurality of unit batteries. The connection member includes: a plurality of bus bars, each of the plurality of bus bars having two through-holes respectively corresponding to two electrode terminals protruding from two adjacent unit batteries of the plurality of unit batteries; and an insulating guide including a plurality of holder units configured to support the plurality of bus bars, and a plurality of narrow width portions positioned between the plurality of holder units and connecting the plurality of holder units along a first direction.

The plurality of holder units are integrally provided with the plurality of narrow width portions, and are made of an elastic insulating material. Each of the plurality of narrow width portions may be positioned on a central axis between two adjacent holder units of the plurality of holder units. Each narrow width portion may include a pair of bending grooves formed on two opposite sides of the corresponding narrow width portion, wherein an axis of bending formed by the pair of bending grooves is perpendicular to the central axis of each of the through-holes and the first direction in which the plurality of holder units is connected. The corresponding narrow width portion may have a thinner thickness than the holder unit.

A corresponding bus bar of the plurality of bus bars may include a center portion having a plate shape having the through-holes and a protrusion protruded from an edge of the center portion. A corresponding holder unit of the plurality of holder units may have an opening configured to receive the corresponding bus bar, and a sliding groove configured to receive the protrusion.

The corresponding bus bar may have a plate shape having a uniform thickness. The corresponding holder unit may have an opening configured to receive the corresponding bus bar, and a sliding groove configured to receive an edge of the corresponding bus bar.

The corresponding holder unit may support the corresponding bus bar by enclosing all edges of the corresponding bus bar.

The corresponding holder unit may support the corresponding bus bar by enclosing two side surfaces of the corresponding bus bar parallel to a length direction of the corresponding bus bar. An inner space may be formed between the corresponding holder unit and the corresponding bus bar in the length direction of the corresponding bus bar, and the corresponding holder unit may further include an elastic guide disposed in the inner space.

The elastic guide may have a bar shape having one end thereof fixed to the corresponding holder unit and another end extended from the corresponding holder unit in an oblique direction toward the corresponding bus bar. The inner space may be formed at opposite sides of the corresponding bus bar in the length direction of the corresponding bus bar, and the elastic guide may be provided in each of the inner spaces at the opposite sides.

An end of each of the elastic guides is fixed to the corresponding holder unit such that the elastic guides are disposed in a same oblique direction.

The insulating guide may further include a plurality of tightening members, each of the plurality of tightening members coupled to a corresponding electrode terminal of the two electrode terminals inserted through a corresponding bus bar of the plurality of bus bars. The corresponding electrode terminal may have a threaded surface, and each of the plurality of tightening members is a nut.

According to an exemplary embodiment of the present invention, the insulating guide is used to configure the plurality of bus bars in the correct position for assembly such that the assembly may be easy, and thereby the time required for the assembly may be reduced. Also, the insulating guide is made of the elastic insulating material such that the manufacturing tolerance and the volume change of the unit battery that is generated in the charging and discharging process of the unit battery may be easily accommodated. Accordingly, the assembled quality of the battery module may be increased, and the deformation of any of the unit batteries may be prevented.

### BRIEF DESCRIPTION OF THE DRAWINGS

The accompanying drawings, together with the specification, illustrate exemplary embodiments of the present invention, and, together with the description, serve to explain the principles of the present invention.

FIG. 1 is an exploded perspective view of a battery module according to a first exemplary embodiment of the present invention.

FIG. 2 is an enlarged perspective view of a connection member of the battery module shown in FIG. 1.

FIG. 3 is a top plan view showing a combination state of a bus bar and an insulating guide in the battery module shown in FIG. 1.

FIG. 4 is a schematic diagram showing an assembly process of the unit batteries and the connection member shown in FIG. 1.

FIG. 5 is an exploded perspective view of a connection member of a battery module according to a second exemplary embodiment of the present invention.

FIG. 6 is a top plan view showing a combination state of a bus bar and an insulating guide in the battery module shown in FIG. 5.

### DETAILED DESCRIPTION

In the following detailed description, only certain exemplary embodiments of the present invention are shown and described, by way of illustration. As those skilled in the art would recognize, the invention may be embodied in many different forms and should not be construed as being limited to the embodiments set forth herein. Also, in the context of the present application, when a first element is described as being "coupled to" a second element, the first element may be directly coupled to the second element or may also be indirectly coupled to the second element with one or more intervening elements interposed there between. Further, some of the elements that are not essential to the complete understanding of the invention are omitted for clarity. Also, like reference numerals refer to like elements throughout the specification.

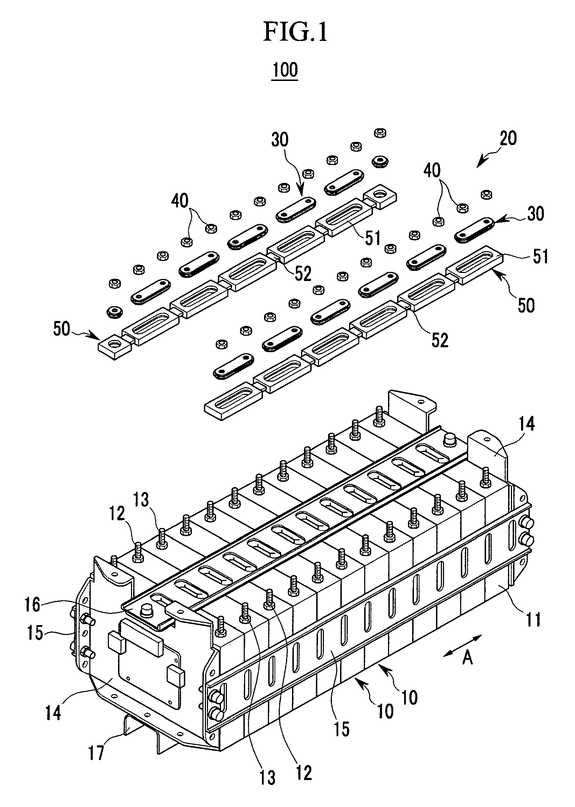

Hereinafter, embodiments of the present invention will be described in more detail with reference to FIGS. 1 to 6 so that those skilled in the art can easily implement the present invention.

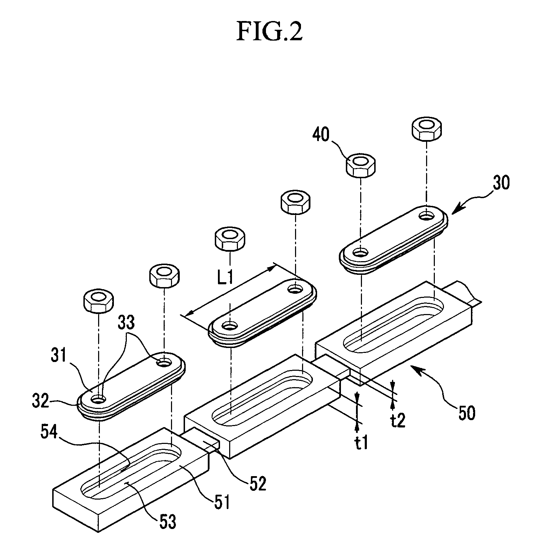

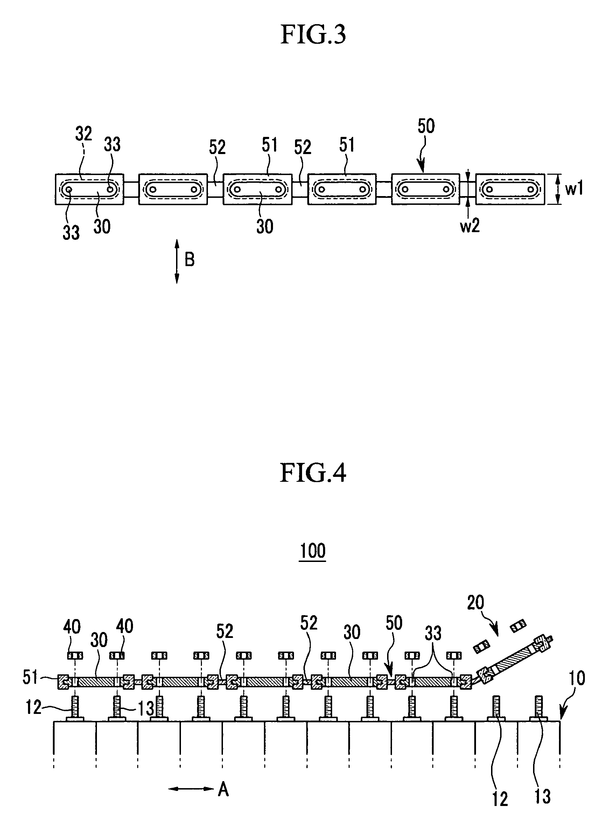

FIG. 1 is an exploded perspective view of a battery module according to the first exemplary embodiment of the present invention, FIG. 2 is an enlarged perspective view of the connection member of the battery module shown in FIG. 1, and FIG. 3 is a top plan view showing a combination state of a bus bar and an insulating guide in the battery module shown in FIG. 1.

Referring to FIGS. 1 to 3, a battery module 100 according to the first exemplary embodiment includes a plurality of unit batteries 10 and connection members 20 assembled to the unit batteries 10 and electrically connecting the unit batteries 10.

Each unit battery 10 is a primary battery or a rechargeable battery. Unlike the primary battery, the rechargeable battery is capable of being recharged. The unit battery 10 includes an electrode assembly including a positive electrode, a negative electrode, and a separator, a case 11 for receiving the electrode assembly, and electrode terminals 12 and 13 protruding outside the case 11. The electrode terminals 12 and 13 include a positive terminal 12 electrically connected to the positive electrode and a negative terminal 13 electrically connected to the negative electrode.

Each battery of the plurality of unit batteries 10 are close to each other and arranged in parallel to each other in one direction. Here, the unit batteries 10 are arranged such that the positive terminals 12 and the negative terminals 13 of adjacent unit batteries 10 are opposite to each other. Accordingly, one positive terminal 12 faces the negative terminal 13 of two adjacent unit batteries 10 according to the arrangement direction of the unit batteries 10, indicated by an arrow direction A of FIG. 1. On the opposite side, one negative terminal 13 faces the positive terminals 12 of two adjacent unit batteries 10.

When the unit battery 10 is a rechargeable battery, a volume change is generated during the charging and discharging process. Accordingly, to suppress dislocation of the unit batteries 10 by the volume change, a pair of end plates 14, a pair of side plates 15, an upper plate 16, and a lower plate 17 may be installed outside of the unit batteries 10.

The pair of end plates 14 are located outside of the outermost unit batteries 10. The pair of side plates 15 are coupled to the pair of end plates 14 while flanking the sides of the unit batteries 10. The upper plate 16 and the lower plate 17 are respectively coupled to the pair of end plate 14 while respectively bordering the upper surface and the lower surface of the unit batteries 10. Accordingly, the end plates 14, the side plates 15, the upper plate 16, and the lower plate 17 press the unit batteries 10 such that deformation by the volume change of the unit batteries 10 is suppressed.

The connection member 20 is electrically connected to the positive terminal 12 and the negative terminal 13 of adjacent unit batteries 10 such that all unit batteries 10 are coupled in series. For this, the connection member 20 includes a plurality of bus bars 30 and a plurality of tightening members 40. Also, the connection member 20 includes an insulating guide 50 connected to the plurality of bus bars 30 thereby connecting the plurality of bus bars 30 into one assembly.

As shown in FIG. 2, each bus bar 30 is made of a metal, and may include a center portion 31 having a plate shape and a uniform thickness, and a protrusion 32 protruded or extending to the outside from an edge of the center portion 31. The length L1 of the center portion 31 is greater than the distance between two electrode terminals 12 and 13 of two adjacent unit batteries 10. The center portion 31 has two through-holes 33 formed at positions corresponding to two electrode terminals 12 and 13 and through which the two electrode terminals 12 and 13 pass. The thickness of the protrusion 32 is less than the thickness of the center portion 31.

A tightening member 40 is provided corresponding to each of the electrode terminals 12 and 13. The electrode terminals 12 and 13 may have a threaded surface. In one embodiment, the tightening member 40 is a nut.

In one embodiment, the insulating guide 50 includes a plurality of holder units 51, each holder unit 51 configured to support a bus bar 30, and a plurality of narrow width portions 52 disposed between the plurality of holder units 51 and connecting the plurality of holder units 51 along one direction. The plurality of holder units 51 and the plurality of narrow width portions 52 are integrally provided, and are made of a flexible insulating material having elasticity. For example, the insulating guide 50 is made of a rubber or a plastic having elasticity.

In one embodiment, the holder unit 51 has an approximately rectangular shape, and supports the bus bar 30 by enclosing the edge of the bus bar 30. The holder unit 51 has an opening 53 into which the bus bar 30 is inserted in the central part thereof, and a sliding groove 54 for receiving the protrusion 32 of the bus bar 30, the protrusion 32 being disposed on an inside surface of the holder unit 51 defining the opening 53.

In one embodiment, the holder unit 51 has a larger thickness than the bus bar 30 such that a portion of the holder unit 51 is protruded or extending above the bus bar 30 and a portion of the holder unit 51 is protruded or extending below the bus bar 30. Accordingly, the holder unit 51 may prevent or protect the bus bar 30 from contacting the unit battery 10 except for the electrode terminals 12 and 13.

With regard to FIG. 3, the holder unit 51 has a first width w1 according to a width direction of the bus bar 30, as indicated by an arrow direction B. The narrow width portion 52 has a second width w2 that is less than the first width w1 according to the width direction of the bus bar 30. In one embodiment, the narrow width portion 52 is not biased in one direction according to the width direction of the bus bar 30 between two adjacent holder units 51 and is disposed at the center thereof. In one embodiment, a pair of bending grooves are symmetrically formed on both sides of the narrow width portion 52. The bending grooves make it possible for the narrow width portion 52 to be bent.

In one embodiment, the narrow width portion 52 is formed with a lesser thickness than that of the holder unit 51. With regard to FIG. 2, when the holder unit 51 has a first thickness t1, the narrow width portion 52 has a second thickness t2 that is less than the first thickness t1. In this case, the bending of the narrow width portion 52 may be facilitated.

The plurality of narrow width portions 52 connect the plurality of holder units 51 supporting the bus bars 30 along one direction. Accordingly, the plurality of bus bars 30 form one assembly that is connected along one direction with the insulating guide 50, as shown in FIG. 3. This assembly is easily bent by external force through the pair of bending grooves at each portion between two adjacent bus bars 30, that is, at each narrow width portion 52.

In one embodiment, the protrusion 32 is formed at the bus bar 30, and the protrusion 32 is inserted into the sliding groove 54 of the holder unit 51. In an alternative embodiment, the bus bar 30 is formed without the protrusion 32, and in this case the edge portion of the bus bar 30 is inserted into the sliding groove 54 of the holder unit 51.

FIG. 4 is a schematic diagram showing an assembly process of the plurality of unit batteries 10 and the connection member 20 shown in FIG. 1.

Referring to FIG. 4, a plurality of unit batteries 10 are prepared, and the unit batteries 10 are alternately arranged such that the positions of each positive terminal 12 and each negative terminal 13 of adjacent unit batteries 10 are opposite to each other. Next, the connection member 20 including a plurality of bus bars 30 and insulating guide 50 is disposed on the unit batteries 10 according to the arrangement direction of the unit batteries 10, indicated by the arrow direction A, and the bus bars 30 are assembled to the electrode terminals 12 and 13 of the unit batteries 10 one by one.

The bus bar 30 that is positioned on the leftmost side with respect to FIG. 4 has two electrode terminals 12 and 13 inserted therein, and the tightening members 40 are subsequently fixed to the electrode terminals 12 and 13. Then, the bus bar 30 to the right has the next two electrode terminals 12 and 13 inserted therein, and the tightening members 40 are subsequently fixed to the electrode terminals 12 and 13. This process is sequentially repeated to assemble a plurality of bus bars 30 to the unit batteries 10 to form the battery module 100. In this process, the insulating guide 50 is easily bent in the narrow width portion 52 such that the assembly of the bus bar 30 for the unit batteries 10 may be facilitated.

As descried above, the insulating guide 50 is used to form the plurality of bus bars 30 into the correct position for assembly such that the time required for the assembly may be reduced.

On the other hand, the insulating guide 50 is made of an insulating material having elasticity such that the manufacturing tolerance and the volume change of the unit batteries 10 that is generated in the charging and discharging process of the unit batteries 10 may be easily accommodated. That is, the narrow width portion 52 of the insulating guide 50 is easily bent in both the arrangement direction of the unit batteries 10 and the direction crossing or perpendicular to the arrangement direction. This flexibility allows the battery module 100 to be designed with the bent state of the insulating guide 50 corresponding to the manufacturing tolerance. The expansion or bending of the insulating guide 50 may also correspond to the volume change of the unit batteries 10. The manufacturing tolerance and the volume change of the unit batteries 10 may thereby be accommodated without deterioration of the connection.

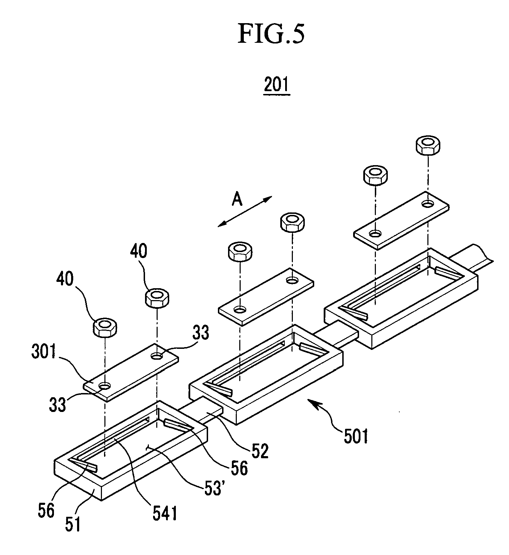

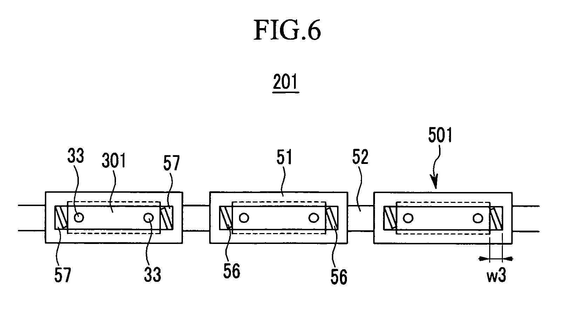

FIG. 5 is an exploded perspective view of a connection member 201 of a battery module according to the second exemplary embodiment of the present invention, and FIG. 6 is a top plan view of a combination state of a bus bar 301 and an insulating guide 501 in the connection member shown in FIG. 5.

Referring to FIG. 5 and FIG. 6, a battery module according to the second exemplary embodiment has the same configuration as the battery module 100 according to the first exemplary embodiment, except that the bus bar 301 of the connection member 201 is formed with a rectangular shape having a uniform thickness and the insulating guide 501 has at least one elastic guide 56. Members that are like those in the first exemplary embodiment are indicated by like reference numerals.

In one embodiment, the insulating guide 501 includes a holder unit 51, a narrow width portion 52, and an elastic guide 56. The holder unit 51 encloses two side surfaces of the bus bar 301 parallel to the length direction of the bus bar 301, and is separated from the bus bar 301 by a set or predetermined inner space 57 according to the length direction of the bus bar 301. The length direction of the bus bar 301 is in accordance with the arrangement direction of the unit batteries, indicated by the arrow direction A.

The holder unit 51 has a sliding groove 541 for receiving two side surfaces of the bus bar 301, the sliding groove 541 being disposed on an inside surface of the holder unit 51 defining an opening 53'. The holder unit 51 is formed with a thicker thickness than the bus bar 301 such that a portion of the holder unit 51 is protruded above the bus bar 301 and a portion of the holder unit 51 is protruded below the bus bar 301.

The elastic guide 56 is installed in the inner space 57 of the holder unit 51. In one embodiment, the elastic guide 56 has a bar shape. One end of the elastic guide 56 is fixed to the holder unit 51, and is elongated or extended from the holder unit 51 toward the bus bar 301 in an oblique direction. In one embodiment, two inner spaces 57 (see FIG. 6) are provided according to the length direction of the bus bar 301 on both sides of the bus bar 301, and a pair of elastic guides 56 may be positioned inside one holder unit 51. In one embodiment, oblique ends of each of a pair of elastic guides 56 in the holder unit 51 are positioned opposite each other, and they are disposed in parallel, in the same oblique direction.

The holder unit 51, the elastic guide 56, and the narrow width portion 52 are connected as one body. The narrow width portion 52 has the same configuration as the first exemplary embodiment. In one embodiment, the bus bar 301 is formed with a plate shape having a uniform thickness. In an alternative embodiment, two side surfaces parallel to the length direction of the bus bar 301 have a protrusion and the sliding groove receiving the protrusion may be formed in the holder unit 51.

In the battery module of the second exemplary embodiment, the elastic guide 56 fixes the bus bar 301 at the proper position before the assembly of the bus bar 301 to the unit batteries 10, and is deformed by external force during the assembly process or after assembly, thereby having a function of absorbing the manufacturing tolerance and the volume change of the unit battery. As shown in FIG. 6, the elastic guide 56 is deformed by the external force such that the width w3 of the inner space 57 between the bus bar 301 and the holder unit 51 may be changed, and accordingly the manufacturing tolerance of the unit battery may be absorbed and it may easily accommodate any possible volume change of the unit batteries.

## Claims

1. A battery module comprising:
a plurality of unit batteries (10) and
a connection member (20, 201) electrically connecting the plurality of unit batteries (10),
the connection member (20, 201) comprising
a plurality of bus bars (30, 301), each of the plurality of bus bars (30, 301) having through-holes (33) respectively corresponding to two electrode terminals protruding from two adjacent unit batteries (10) of the plurality of unit batteries (10); and
an insulating guide (50, 501) comprising a plurality of holder units (51) configured to support the plurality of bus bars(30, 301), and a plurality of narrow width portions (52) positioned between the plurality of holder units (51) and connecting the plurality of holder units (51) along a first direction,
**characterized in that**
the plurality of holder units (51) are integrally provided with the plurality of narrow width portions (52), and the plurality of holder units (51) and the plurality of narrow width portions (52) are made of an elastic insulating material.

2. The battery module of claim 1, wherein
each of the plurality of narrow width portions (52) is positioned on a central axis between two adjacent holder units (51) of the plurality of holder units (51).

3. The battery module of one of claims 1 to 2, wherein
the corresponding narrow width portion (52) has a thinner thickness than the holder unit (51).

4. The battery module of one of claims 1 to 3, wherein
a corresponding bus bar (30) of the plurality of bus bars (30) comprises a center portion (31) having a plate shape having the through-holes (33) and a protrusion (32) protruded from an edge of the center portion (31).

5. The battery module of claim 4, wherein
a corresponding holder unit (51) of the plurality of holder units (51) has an opening (53) configured to receive the corresponding bus bar (30), and a sliding groove (54) configured to receive the protrusion (32).

6. The battery module of claim 1, wherein
a corresponding bus bar (30) of the plurality of bus bars (30) has a plate shape having a uniform thickness.

7. The battery module of claim 6, wherein
a corresponding holder unit (51) of the plurality of holder units (51) has an opening (53) configured to receive the corresponding bus bar (30), and a sliding groove (54) configured to receive an edge of the corresponding bus bar (30).

8. The battery module of one of claims 1 to 7, wherein
a corresponding holder unit (51) of the plurality of holder units (51) supports a corresponding bus bar (30) of the plurality of bus bars (30) by enclosing all edges of the corresponding bus bar (30).

9. The battery module of one of claims 1 to 3, wherein
a corresponding holder unit (51) of the plurality of holder units (51) supports a corresponding bus bar (301) of the plurality of bus bars (301) by enclosing two side surfaces of the corresponding bus bar (301) parallel to a length direction of the corresponding bus bar.

10. The battery module of claim 9, wherein
an inner space (57) is formed between the corresponding holder unit (51) and the corresponding bus bar (301) in the length direction of the corresponding bus bar (301), and the corresponding holder unit (51) further includes an elastic guide (56) disposed in the inner space (57).

11. The battery module of claim 10, wherein
the elastic guide (56) has a bar shape having one end thereof fixed to the corresponding holder unit (51) and another end extended from the corresponding holder unit (51) in an oblique direction toward the corresponding bus bar (301).

12. The battery module of claim 11, wherein
the inner space (57) is formed at opposite sides of the corresponding bus bar (301) in the length direction of the corresponding bus bar (301), and the elastic guide (56) is provided in each of the inner spaces (57) at the opposite sides.

13. The battery module of claim 12, wherein
an end of each of the elastic guides (56) is fixed to the corresponding holder unit (51) such that the elastic guides (56) are disposed in a same oblique direction.

## Patentansprüche

1. Batteriemodul, umfassend:
eine Mehrzahl von Einheitsbatterien (10) und
ein Verbindungselement (20, 201), das die Mehrzahl von Einheitsbatterien (10) elektrisch verbindet,
wobei das Verbindungselement (20, 201) umfasst:
eine Mehrzahl von Sammelschienen (30, 301), wobei jede der Mehrzahl von Sammelschienen (30, 301) Durchgangslöcher (33) aufweist, die jeweils zwei, von zwei benachbarten Einheitsbatterien (10) der Mehrzahl von Einheitsbatterien (10) hervorstehenden Elektrodenklemmen entsprechen; und
eine Isolierführung (50, 501), die eine Mehrzahl von Haltereinheiten (51) umfasst, die so ausgestaltet sind, dass sie die Mehrzahl von Sammelschienen (30, 301) tragen, und eine Mehrzahl schmaler Abschnitte (52), die zwischen der Mehrzahl von Haltereinheiten (51) positioniert sind und die Mehrzahl von Haltereinheiten (51) entlang einer ersten Richtung verbinden,
**dadurch gekennzeichnet, dass**
die Mehrzahl von Haltereinheiten (51) einstückig mit der Mehrzahl schmaler Abschnitte (52) vorgesehen sind und die Mehrzahl von Haltereinheiten (51) und die Mehrzahl schmaler Abschnitte (52) aus einem elastischen Isoliermaterial gefertigt sind.

2. Batteriemodul nach Anspruch 1, wobei
jeder der Mehrzahl schmaler Abschnitte (52) auf einer mittigen Achse zwischen zwei benachbarten Haltereinheiten (51) der Mehrzahl von Haltereinheiten (51) positioniert ist.

3. Batteriemodul nach einem der Ansprüche 1 bis 2, wobei
der entsprechende schmale Abschnitt (52) eine geringere Dicke aufweist als die Haltereinheit (51).

4. Batteriemodul nach einem der Ansprüche 1 bis 3, wobei
eine entsprechende Sammelschiene (30) der Mehrzahl von Sammelschienen (30) einen mittleren Abschnitt (31) umfasst, der eine Plattenform aufweist, wobei die Durchgangslöcher (33) und ein Vorsprung (32) von einer Kante des mittleren Abschnitts (31) hervorstehen.

5. Batteriemodul nach Anspruch 4, wobei
eine entsprechende Haltereinheit (51) der Mehrzahl von Haltereinheiten (51) aufweist: eine Öffnung (53), die so ausgestaltet ist, dass sie die entsprechende Sammelschiene (30) aufnimmt, und eine Gleitnut (54), die so ausgestaltet ist, dass sie den Vorsprung (32) aufnimmt.

6. Batteriemodul nach Anspruch 1, wobei
eine entsprechende Sammelschiene (30) der Mehrzahl von Sammelschienen (30) eine Plattenform mit einheitlicher Dicke aufweist.

7. Batteriemodul nach Anspruch 6, wobei
eine entsprechende Haltereinheit (51) der Mehrzahl von Haltereinheiten (51) aufweist: eine Öffnung (53), die so ausgestaltet ist, dass sie die entsprechende Sammelschiene (30) aufnimmt, und eine Gleitnut (54), die so ausgestaltet ist, dass sie eine Kante der entsprechenden Sammelschiene (30) aufnimmt.

8. Batteriemodul nach einem der Ansprüche 1 bis 7, wobei
eine entsprechende Haltereinheit (51) der Mehrzahl von Haltereinheiten (51) eine entsprechende Sammelschiene (30) der Mehrzahl von Sammelschienen (30) trägt, indem sie alle Kanten der entsprechenden Sammelschiene (30) umschließt.

9. Batteriemodul nach einem der Ansprüche 1 bis 3, wobei
eine entsprechende Haltereinheit (51) der Mehrzahl von Haltereinheiten (51) eine entsprechende Sammelschiene (301) der Mehrzahl von Sammelschienen (301) trägt, indem sie zwei Seitenflächen der entsprechenden Sammelschiene (301) parallel zu einer Längsrichtung der entsprechenden Sammelschiene umschließt.

10. Batteriemodul nach Anspruch 9, wobei
zwischen der entsprechenden Haltereinheit (51) und der entsprechenden Sammelschiene (301) in der Längsrichtung der entsprechenden Sammelschiene (301) ein Innenraum (57) ausgebildet ist und die entsprechende Haltereinheit (51) ferner eine elastische Führung (56) einschließt, die in dem Innenraum (57) angeordnet ist.

11. Batteriemodul nach Anspruch 10, wobei
die elastische Führung (56) eine Stabform aufweist, wobei ein Ende derselben an der entsprechenden Haltereinheit (51) befestigt ist und ein anderes Ende sich von der entsprechenden Haltereinheit (51) in einer schrägen Richtung hin zu der entsprechenden Sammelschiene (301) erstreckt.

12. Batteriemodul nach Anspruch 11, wobei
der Innenraum (57) an gegenüberliegenden Seiten der entsprechenden Sammelschiene (301) in der Längsrichtung der entsprechenden Sammelschiene (301) ausgebildet ist und die elastische Führung (56) in jedem der Innenräume (57) an den gegenüberliegenden Seiten vorgesehen ist.

13. Batteriemodul nach Anspruch 12, wobei
ein Ende jeder der elastischen Führungen (56) so an der entsprechenden Haltereinheit (51) befestigt ist, dass die elastischen Führungen (56) in einer gleichen schrägen Richtung angeordnet sind.

## Revendications

1. Module de batteries, comprenant :
une pluralité de batteries unitaires (10) et
un élément de connexion (20, 201) connectant électriquement la pluralité de batteries unitaires (10),
l'élément de connexion (20, 201) comprenant
une pluralité de barres bus (30, 301), chacune de la pluralité de barres bus (30, 301) comportant des trous traversants (33) correspondant respectivement à deux bornes d'électrodes faisant saillie de deux batteries unitaires adjacentes (10) de la pluralité de batteries unitaires (10) ; et
un guide isolant (50, 501) comprenant une pluralité d'unités de support (51) configurées pour supporter la pluralité de barres bus (30, 301), et une pluralité de portions de faible largeur (52) positionnées entre la pluralité d'unités de support (51) et connectant la pluralité d'unités de support (51) le long d'une première direction,
**caractérisé en ce que**
la pluralité d'unités de support (51) est fournie en une seule pièce avec la pluralité de portions de faible largeur (52), et la pluralité d'unités de support (51) et la pluralité de portions de faible largeur (52) sont constituées d'une matière isolante élastique.

2. Module de batteries suivant la revendication 1, dans lequel
chacune de la pluralité de portions de faible largeur (52) est positionnée sur un axe central entre deux unités de support adjacentes (51) de la pluralité d'unités de support (51)

3. Module de batteries suivant l'une des revendications 1 et 2, dans lequel
la portion de faible largeur (52) correspondante a une épaisseur inférieure à celle de l'unité de support (51)

4. Module de batteries suivant l'une des revendications 1 à 3, dans lequel
une barre bus correspondante (30) de la pluralité de barres bus (30) comprend une portion centrale (31) en forme de plaque comportant les trous traversants (33) et une protubérance (32) faisant saillie à partir d'un bord de la portion centrale (31).

5. Module de batteries suivant la revendication 4, dans lequel
une unité de support correspondante (51) de la pluralité d'unités de support (51) comporte un orifice (53) configuré pour recevoir la barre bus correspondante (30), et une rainure de coulissement (54) configurée pour recevoir la protubérance (32).

6. Module de batteries suivant la revendication 1, dans lequel
une barre bus correspondante (30) de la pluralité de barres bus (30) a une forme de plaque d'épaisseur uniforme.

7. Module de batteries suivant la revendication 6, dans lequel
une unité de support correspondante (51) de la pluralité d'unités de support (51) comporte un orifice (53) configuré pour recevoir la barre bus correspondante (30), et une rainure de coulissement (54) configurée pour recevoir un bord de la barre bus correspondante (30).

8. Module de batteries suivant l'une des revendications 1 à 7, dans lequel
une unité de support correspondante (51) de la pluralité d'unités de support (51) porte une barre bus correspondante (30) de la pluralité de barres bus (30) en entourant tous les bords de la barre bus correspondante (30).

9. Module de batteries suivant l'une des revendications 1 à 3, dans lequel
une unité de support correspondante (51) de la pluralité d'unités de support (51) porte une barre bus correspondante (301) de la pluralité de barres bus (301) en entourant deux surfaces latérales de la barre bus correspondante (301) parallèlement à la direction longitudinale de la barre bus correspondante.

10. Module de batteries suivant la revendication 9, dans lequel
un espace intérieur (51) est formé entre l'unité de support correspondante (51) et la barre bus correspondante (310) dans la direction longitudinale de la barre bus correspondante (301), et l'unité de support correspondante (51) comprend en outre un guide élastique (56) disposé dans l'espace intérieur (57).

11. Module de batteries suivant la revendication 10, dans lequel
le guide élastique (56) a une forme de barre dont une extrémité est fixée à l'unité de support correspondante (51) et une autre extrémité s'étend à partir de l'unité de support correspondante (51) dans une direction oblique vers la barre bus correspondante (301).

12. Module de batteries suivant la revendication 11, dans lequel
l'espace intérieur (57) est formé à des côtés opposés de la barre bus correspondante (301) dans la direction longitudinale de la barre bus correspondante (301), et le guide élastique (56) est fourni dans chacun des espaces intérieurs (57) au niveau des côtés opposés.

13. Module de batteries suivant la revendication 12, dans lequel
une extrémité de chacun des guides élastiques (56) est fixée à l'unité de support correspondante (51) de telle sorte que les guides élastiques (56) soient disposés dans une même direction oblique.
